# EUROPÄISCHE PATENTSCHRIFT

(11) **EP 1 943 613 B1**
(45) Veröffentlichungstag und Bekanntmachung des Hinweises auf die Patenterteilung: **09.12.2009**
(21) Anmeldenummer: 06777764.9
(22) Anmeldetag: 13.07.2006
(51) Int. Cl.: G06K 19/06, G06K 19/07, G07C 9/00, B42D 15/10

(54) **DOKUMENT MIT EINEM ELEKTRONISCHEN GERÄT**
DOCUMENT COMPRISING AN ELECTRONIC DEVICE
DOCUMENT COMPRENANT UN APPAREIL ELECTRONIQUE

(30) Priorität: 28.10.2005 DE 102005052071
(43) Veröffentlichungstag der Anmeldung: 16.07.2008
(73) Patentinhaber: Bundesdruckerei GmbH, 10958 Berlin (DE)
(72) Erfinder: MUTH, Oliver, 12277 Berlin (DE); PFLUGHOEFFT, Malte, 13347 Berlin (DE); HOPPE, Andreas, 13347 Berlin (DE); PASCHKE, Manfred, 16352 Basdorf (DE); DRESSEL, Olaf, 14641 Wustermark (DE)
(74) Vertreter: Richardt, Markus Albert
(86) Internationale Anmeldenummer: PCT/EP2006/064216
(87) Internationale Veröffentlichungsnummer: WO 2007/048646

(56) Entgegenhaltungen:
- EP-A2- 1 381 159
- WO-A-01/82004
- DE-A1- 4 205 403
- US-A- 4 298 115
- US-A1- 2003 014 894

## Beschreibung

Die Erfindung betrifft ein Dokument mit einem elektronischen Gerät, welches insbesondere als so genannte Smartcard in kontaktbehafteter, kontaktloser oder Dual-Interface Ausführung ausgebildet ist. Bei dem Dokument kann es sich zum Beispiel um einen Kartenaufbau, insbesondere eine so genannte Smartcard, handeln, oder um ein Papierdokument oder einen Aufkleber.

Aus dem Stand der Technik sind verschiedene Funk-Erkennungssysteme bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät oder Reader bezeichnet.
Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Femfeld. Die Entfernung, über die ein RFID-Transponder angesprochen und ausgelesen werden kann, schwankt aufgrund der Ausführung (passiv / aktiv), dem benutzten Frequenzband, der Sendestärke und anderen Umwelteinflüssen zwischen wenigen Zentimetern und mehr als einem Kilometer.

Ein RFID-Transponder beinhaltet üblicherweise einen Mikrochip und eine Antenne, die in einem Träger oder Gehäuse untergebracht oder ein Substrat aufgedruckt sind. Aktive RFID-Transponder verfügen ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing, oder werden in Papier, wie zum Beispiel Wert- und Sicherheitsdokumenten, wie Geldscheine und Ausweisdokumente integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente werden im Stand der Technik zum Teil als Chipkarten realisiert. Diese können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und - verfahren sind zum Beispiel in der Norm ISO 14443 festgelegt.

Chipkarten mit kontaktlosen IC-Modulen, die zusätzlich an- bzw. ausgeschaltet werden können, gehören zum Stand der Technik. So beinhalten die EP 0 557 934 B1 und die EP 0 562 292 B1 einen manuell zu betätigenden Schalter, welcher bestimmte elektronische Komponenten miteinander verbindet und so zu Änderungen der Resonanzfrequenz führt. Beide o. g. Schriften gehen allerdings nicht explizit auf die Bau-Art bzw. Funktionsweise des Schalters ein, sondern sprechen lediglich von einem Schaltvorgang.

Die EP 0 946 926 B1 zeigt ebenfalls einen mechanischen Schalter für ein kontaktloses RFID-Modul. Die Kontaktflächen IC / Antenne sind grundsätzlich räumlich getrennt und können nur durch mechanischen Druck miteinander verbunden werden und das Modul somit aktivierbar machen. Der Nachteil hierbei ist, dass das Modul nur in "gedrückter Weise" aktiv ist. Aufgrund der individuellen Ausführungsmöglichkeiten sind hier wenig reproduzierbare Schalt- / Kommunikations-vorgänge zu erwarten.

Die DE 101 40 662 C1, die US 6,863,220 B2, die WO 09/916019 A1 und die WO 00/108182 A1 beschreiben Ausführungsformen mechanischer (Tast-)Schalter zur Anwendung in Chipkarten.

In der US 6,830,193 B2 dagegen werden u. a. zwei Schaltprinzipien publiziert, nämlich einmal die mechanisch-elektrische Kontaktierung des ICs mit der Antenne und einmal die Modulation der Resonanzfrequenz infolge eines Wechselschalters. Der Wechselschalter wird mechanisch bedient und sorgt durch die Verbindung bestimmter Antennenteile für unterschiedliche Antennengeometrien, welche wiederum in unterschiedlichen Resonanzfrequenzen resultiert.

Aus der DE 10 2004 018 859 B3 ist eine Speicherschaltung zum Bereitstellen einer Information für eine vorgegebene Zeitdauer bekannt. Bei der Information handelt es sich um Audio- oder Videodaten. Die Speicherschaltung hat eine Speicherzelle mit einem PMC-Widerstandsbauelement, das einen Widerstandswert hat, welcher im Laufe der Zeit degradiert. Eine Anwendung einer solchen Speicherschaltung für Dokumente, insbesondere Wert- oder Sicherheitsdokumente, ist hieraus nicht bekannt.

Aus EP 1 381 159 A2 ist ein Dokument bekannt, auf dem ein Aufkleber mit einer darin eingebetteten RFID angebracht ist. Die RFID beinhaltet eine festkörperbasierte Alterungsvorrichtung, durch die je nach Anwendungsfall ein batterieloser elektronischer Timer oder ein kryptografischer Schlüssel mit einer zeitlichen Limitierung zur Verfügung gestellt wird. Die zeitliche Limitierung der Alterungsvorrichtung basiert darauf, dass Elektronen einen pn-Übergang durchtunneln.

Aus DE 42 05 403 A1 ist eine Verpackung für Verbrauchsgegenstände bekannt. Die Verpackung hat eine Zeitmesseinrichtung, die durch den Öffnungsvorgang der Verpackung oder durch den Herstellungsvorgang des Verbrauchgegenstandes aktiviert wird, und die nach einem vorprogrammierten Zeitpunkt eine charakteristische Anzeige oder ein Signal abgibt.

Aus WO 01/82004 A1 ist ein Dokument mit einer Zeitmess-Einrichtung bekannt. Zur Realisierung des Timers werden elektronische und chemische Timer offenbart. Der elektronische Timer beinhaltet einen Zähler. Wenn der Zähler eine vorgegebene Schwelle erreicht, wird eine Anzeigevorrichtung angesteuert, um anzuzeigen, dass das Ende des Zeitintervalls erreicht worden ist.

Der Erfindung liegt dem gegenüber die Aufgabe zu Grunde, ein verbessertes Dokument zu schaffen, insbesondere ein Wert-, Identifikations- oder Sicherheitsdokument, welches eine vorgegebene Gültigkeit hat.

Die der Erfindung zu Grunde liegende Aufgabe wird mit den Merkmalen der Patentansprüche 1 und 5 gelöst. Bevorzugte Ausführungsformen der Erfindung sind in den abhängigen Patentansprüchen angegeben.

Erfindungsgemäß wird ein Dokument mit vorgegebener Gültigkeit und einem elektronischen Gerät geschaffen. Das elektronische Gerät ist so ausgebildet, dass es aufgrund eines allmählich ablaufenden physikalischen und / oder chemisches Prozess in etwa zum Ende der Gültigkeit funktionsuntüchtig wird. Der Prozess kann dabei in dem Gerät selbst und/oder in dessen unmittelbarer oder mittelbarer Umgebung ablaufen, sodass dieses funktionsuntüchtig wird.

In einer Ausführungsform der Erfindung werden bei diesem Dokument gezielt Materialeigenschaften in unmittelbarer oder mittelbarer Umgebung des elektronischen Gerätes genutzt, um dieses zu aktivieren und / der zu deaktivieren. Dieses hat im Gegensatz zum mechanischen Schalter nach dem Stand der Technik den Vorteil, dass in einer erfindungsgemäßen Ausführung dieser Schaltvorgang in das Dokument eingebaut ist, sodass eine Manipulation nach der Ausgabe des Dokuments nicht mehr möglich ist.

Dies hat den Vorteil, dass das Dokument nach Ablauf seiner Gültigkeit nicht mehr maschinell verarbeitet werden kann.

Nach einer weiteren Ausführungsform der Erfindung wird eine Eigenschaft des elektronischen Gerätes durch den Prozess so verändert, dass keine Wechselwirkung mit einem dem Standard entsprechenden Lesegerät mehr auftritt. Im Falle einer Ausführung als RFID-Dokuments ergibt sich somit vorteilhafter Weise, dass dem elektromagnetischen Feld keine Energie entzogen wird, und somit die Kommunikation zu anderen RFID-Elementen, beispielsweise im selben Dokument, nicht gestört wird. Des weiteren wird auf diese Weise ein unbefugtes Auslesen der Daten erschwert oder im Idealfall unmöglich gemacht.

Die Energieaufnahme eines RFID-Transponders erfolgt nämlich aus dem elektromagnetischem Feld, wobei der Frequenzbereich, in welchem der RFID-Transponder zur Absorption effizient in der Lage ist, u. a. durch Kapazität und Induktivität des Transponders bestimmt wird. Sind nun zwei oder mehr Transponder in unmittelbarer Nähe zueinander, so beeinflussen sich die Induktivitäten in der Art, dass die Resonanzfrequenz verändert wird und somit die Energieübertragung weniger effizient erfolgt. Aus diesem Grund ist es vorteilhaft, RFID-Transponder in einer Art zu deaktivieren, dass keine Wechselwirkung der beschriebenen Art mehr mit aktiven Transpondem auftritt.

Die vorgegebene Gültigkeit des Dokuments kann beispielsweise als Gültigkeitszeitdauer oder als eine maximale Anzahl von Zugriffsoperationen auf das elektronische Gerät definiert sein.

Bei dem Dokument handelt es sich vorzugsweise um ein Wert-, Identifikations- oder Sicherheitsdokument, wie zum Beispiel einen Führerschein, einen Personalausweis, einen Reisepass oder ein Visum. In diesem Fall sind in dem elektronischen Gerät personenbezogene Daten gespeichert, auf die mit Hilfe eines entsprechenden Lesegeräts oder Chipkarten-Terminals zugegriffen werden kann. Ein solcher Zugriff ist nach Ablauf der Gültigkeit nicht mehr möglich, da das elektronische Gerät aufgrund des während seiner Gültigkeit allmählich ablaufenden physikalischen und / oder chemischen Prozess zumindest teilweise funktionsuntüchtig geworden ist.

Eine Weiterverwendung des Dokuments über dessen Gültigkeit hinaus ist daher auch was dessen maschinelle Verarbeitung oder Prüfung betrifft nicht mehr möglich, da durch die Funktionsuntüchtigkeit des elektronischen Geräts der Zugriff auf die in dem elektronischen Gerät gespeicherten Daten verhindert wird. Ferner werden dadurch auch Manipulationsversuche zur Einprogrammierung einer verlängerten Gültigkeit in das elektronische Gerät unterbunden.

Nach einer Ausführungsform der Erfindung ist das Dokument als Aufkleber, wie z.B. als Abziehbild, ausgebildet.

Nach einer Ausführungsform der Erfindung hat das Dokument einen Aufdruck, der mit Hilfe eines Verfahrens des Wert- oder Sicherheitsdrucks aufgebracht worden ist. Hierbei können Wert- oder Sicherheitsdruckverfahren zum Einsatz kommen, wie sie für den Druck von Banknoten, Briefmarken, Ausweisdokumenten und dergleichen eingesetzt werden.

Nach einer Ausführungsform der Erfindung beinhaltet das elektronische Gerät einen integrierten elektronischen Schaltkreis oder es wird durch einen solchen integrierten elektronischen Schaltkreis gebildet. Durch den während der Gültigkeit allmählich ablaufenden physikalischen und / oder chemischen Prozess werden ein oder mehrere der Komponenten des integrierten elektronischen Schaltkreises einer fortschreitenden Umwandlung unterzogen, so dass der integrierte elektronische Schaltkreis nach Ablauf der Gültigkeit zumindest teilweise funktionsuntüchtig wird.

Nach einer weiteren Ausführungsform der Erfindung beinhaltet das elektronische Gerät eine Kommunikationsschnittstelle, wie zum Beispiel eine drahtgebundene, drahtlose oder Dual-Interface Kommunikationsschnittstelle. Aufgrund des während der Gültigkeit ablaufenden physikalischen und / oder chemischen Prozess wird die Kommunikationsschnittstelle und / oder die Verbindung der Kommunikationsschnittstelle mit dem elektronischen Gerät funktionsuntüchtig.

Nach einer weiteren Ausführungsform der Erfindung hat das elektronische Gerät zumindest eine elektrische oder optische Leiterbahn, die aufgrund des allmählich ablaufenden physikalischen und / oder chemischen Prozesses nach Ablauf der vorgegebenen Gültigkeit unterbrochen oder kurzgeschlossen wird, so dass das elektronische Gerät zumindest teilweise funktionsuntüchtig wird.

Nach einer weiteren Ausführungsform der Erfindung beinhaltet das elektronische Gerät eine Antenne, die über eine Leiterbahn mit einer anderen Komponente des elektronischen Geräts verbunden ist. Durch den allmählich ablaufenden physikalischen und / oder chemischen Prozess wird die Antenne selbst und / oder die die Antenne mit der Komponente des elektronischen Geräts verbindende Leiterbahn funktionsuntüchtig gemacht, d.h. zum Beispiel unterbrochen oder kurzgeschlossen.

Nach einer weiteren Ausführungsform der Erfindung erfolgt die Energieversorgung des elektronischen Geräts aus den mittels der Antenne empfangenen Funkwellen. Das elektronische Gerät kann dabei mit oder ohne einer weiteren Energieversorgung ausgeführt sein, beispielsweise einer Batterie, Solarzellen, einem Thermoelektrischen Element, wie z.B. einem Seebeck- oder Peltier-Element oder dergleichen.

Nach einer weiteren Ausführungsform der Erfindung handelt es sich bei dem elektronischen Gerät um einen Transponder, vorzugsweise um einen RFID-Transponder. Besonders bevorzugt ist die Ausbildung als passiver RFID-Transponder, da hier auf eine Batterie für die Energieversorgung verzichtet werden kann. Dies ist insbesondere für Dokumente mit langer Gültigkeit bevorzugt.

Nach einer weiteren Ausführungsform der Erfindung ist das elektronische Gerät so ausgebildet, dass der allmählich ablaufende physikalische und / oder chemische Prozess bei der Herstellung des elektronischen Geräts oder des Dokuments gestartet wird. Dies ist insbesondere bei einer zentralisierten Personalisierung des Dokuments vorteilhaft.

Nach einer weiteren Ausführungsform der Erfindung hat das Dokument Mittel zur kontrollierten Auslösung des allmählich ablaufenden physikalischen und / oder chemischen Prozesses. Dies ist insbesondere bei einer dezentralen Personalisierung des Dokuments bevorzugt, da hierbei im Allgemeinen die Gültigkeit ebenfalls dezentral festgelegt wird.

Nach einer weiteren Ausführungsform der Erfindung beinhaltet der allmählich ablaufende Prozess die Diffusion eines Stoffs, welche nach Ablauf der Gültigkeit zur zumindest teilweisen Funktionsuntüchtigkeit des elektronischen Geräts führt. Dabei kann der Stoff aus der Umgebung eindiffundieren oder wird in einem internen Reservoir des Dokuments zur Verfügung gestellt.

Zur kontrollierten Auslösung der Diffusion des Stoffs kann beispielsweise eine Schutzfolie entfernt werden, so dass der Stoff aus der Umgebung in das Dokument bzw. das elektronische Gerät eindiffundieren kann. Alternativ oder zusätzlich kann das Dokument oder das elektronische Gerät ein Reservoir des Stoffs beinhalten.

Nach einer weiteren Ausführungsform der Erfindung hat das Reservoir hat eine Wandung, die durch einen mechanischen, physikalischen und / oder chemischen Vorgang auftrennbar ist, so dass der Stoff aus dem Reservoir in das Dokument bzw. das elektronische Gerät eindiffundieren kann. Das Reservoir kann zum Beispiel durch ein oder mehrere in dem Dokument eingebettete Mikrokapseln gebildet werden, die durch eine äußere Krafteinwirkung, wie zum Beispiel einen Stempelaufdruck der den Pass ausstellenden Behörde aufgebrochen werden.

Nach einer weiteren Ausführungsform der Erfindung führt die Diffusion des Stoffs unmittelbar oder mittelbar durch Auslösung weiterer physikalischer und / oder chemischer Vorgänge, die allmählich zur zumindest teilweisen Funktionsuntüchtigkeit des elektronischen Geräts führen.

Nach einer weiteren Ausführungsform der Erfindung beinhaltet der allmählich ablaufende Prozess eine Redox-Reaktion. Beispielsweise kommt es durch kontrollierte Eindiffusion von Sauerstoff zum Beispiel aus der Umgebung zu einer Oxidation zumindest einer Komponente des elektronischen Geräts.

Nach einer weiteren Ausführungsform der Erfindung erfolgt durch die Diffusion des Stoffes eine Dotierung zumindest einer der Komponente des elektronischen Geräts, so dass sich beispielsweise deren Leitfähigkeit allmählich so verringert, dass sie nach Ablauf der Gültigkeit zur zumindest teilweise Funktionsuntüchtigkeit des elektronischen Geräts führt.

Nach einer weiteren Ausführungsform der Erfindung beinhaltet der allmählich ablaufende Prozess eine pH-Wert-Änderung. Beispielsweise beinhaltet das elektronische Gerät ein leitfähiges Polymer, wie zum Beispiel Polyanilin. Durch eine allmähliche Änderung des pH-Werts kann, die Leitfähigkeit des Polymers soweit reduziert werden, dass dies nach Ablauf der Gültigkeit zur zumindest teilweisen Funktionsuntüchtigkeit führt. In einer solchen Ausführungsform ist das elektronische Gerät vorzugsweise zumindest teilweise unter Verwendung leitfähiger Polymere auf das Dokument aufgedruckt.

Nach einer weiteren Ausführungsform der Erfindung beinhaltet der allmählich ablaufende Vorgang die Unterbrechung eines konjugierten Systems und / oder eine Depolymerisation. Sowohl die Unterbrechung des konjugierten Systems als auch eine Depolymerisation kann zur Reduktion der Leitfähigkeit von leitfähigen Polymeren eingesetzt werden, um allmählich eine Funktionsuntüchtigkeit des elektronischen Geräts, das zumindest teilweise durch solche leitfähigen Polymere realisiert ist, herbeizuführen.

Nach einer weiteren Ausführungsform der Erfindung beinhaltet der allmählich ablaufende Prozess einen Aufnahmevorgang. Beispielsweise beinhaltet das Dokument bzw. das elektronische Gerät vernetzte ionische Polymere, das heißt einen so genannten Superabsorber. Durch die Aufnahme von Wasser, welches durch gezielte Diffusion durch entsprechende Schichten in das Dokument eindringt beziehungsweise aus einem internen Reservoir stammt, verändert sich das Volumen des Superabsorbers durch die Aufnahme des Wassers, so dass das elektronische Gerät zumindest teilweise funktionsuntüchtig wird. Beispielsweise wird durch den sich ausdehnenden Superabsorber eine Leiterbahn unterbrochen, so dass die Antenne von dem elektronischen Gerät getrennt wird.

Nach einer weiteren Ausführungsform der Erfindung beinhaltet der allmählich ablaufende Prozess die Ausrichtung von leitfähigen Partikeln bevorzugt durch ein elektrisches oder magnetisches Feld. Beispielsweise werden die leitfähigen Partikel aufgrund der bei aufeinander folgenden Leseoperationen durch ein externes Gerät erzeugten Felder allmählich so ausgerichtet, dass ein Kurzschluss entsteht, welcher das elektronische Gerät zumindest teilweise funktionsunfähig macht. Beispielsweise führt eine gewisse Anzahl von Zugriffsoperationen von dem externen Gerät auf das elektronische Gerät des Dokuments zu dem Kurzschluss und damit zu der Funktionsuntüchtigkeit.

Nach einer weiteren Ausführungsform der Erfindung sind die in dem elektronischen Gerät des Dokuments gespeicherten Daten, wie zum Beispiel Personen und / oder objektbezogene Daten, durch ein kryptographisches Protokoll vor unbefugtem Zugriff geschützt.

Nach einer weiteren Ausführungsform der Erfindung ist die Gültigkeit des Dokuments im Klartext auf dem Dokument zu lesen. Beispielsweise ist die Gültigkeitszeitdauer auf das Dokument gedruckt oder wird von einer Anzeigevorrichtung des Dokuments angezeigt.

Im weiteren werden bevorzugte Ausführungsbeispiele der Erfindung mit Bezugnahme auf die Zeichnungen näher erläutert. Es zeigen:
- Figur 1: ein Blockdiagramm einer ersten Ausführungsform eines erfindungsgemäßen Dokuments mit einem elektronischen Gerät, beispielsweise einer Smartcard, und eines Lesegeräts,
- Figur 2: einen Querschnitt einer Ausführungsform eines erfindungsgemäßen Dokuments,
- Figur 3: die Ausführungsform der Figur 2 nach Auslösung eines allmählich ablaufenden Vorgangs als dessen Ergebnis, das elektronische Gerät in dem Dokument zumindest teilweise funktionsuntüchtig wird,
- Figur 4: einen Querschnitt einer Ausführungsform eines erfindungsgemäßen Dokuments mit einer Darstellung eines Diffusionsprozesses,
- Figur 5: eine Säure-Base-Reaktion am Beispiel Polyanilin,
- Figur 6: eine Redox-Reaktion am Beispiel PEDOT,
- Figur 7: die Vernetzung leitfähiger Polymere am Beispiel des Polyethin zur Reduktion der Leitfähigkeit"
- Figur 8: einen Querschnitt einer Ausführungsform eines erfindungsgemäßen Dokuments, bei welchem der Diffusionsprozess durch eine Sperrschicht hindurch erfolgt,
- Figur 9: eine Ausführungsform eines erfindungsgemäßen Dokuments mit einem geschlossenen elektrischen oder optischen Kontakt,
- Figur 10: die Öffnung des Kontakts der Figur 9 aufgrund eines Aufnahmeprozesses,
- Figur 11: eine Ausführungsform eines erfindungsgemäßen Dokuments mit elektrisch leitfähigen Partikeln, die zunächst ungeordnet zwischen zwei Elektroden angeordnet sind,
- Figur 12: das Dokument der Figur 11, nachdem die elektrisch leitfähigen Partikel ausgerichtet worden sind, so dass ein Kurzschluss zwischen den beiden Elektroden hergestellt wird,
- Figur 13: ein Blockdiagramm einer Ausführungsform eines erfindungsgemäßen Dokuments mit einem entsprechenden Lesegerät.

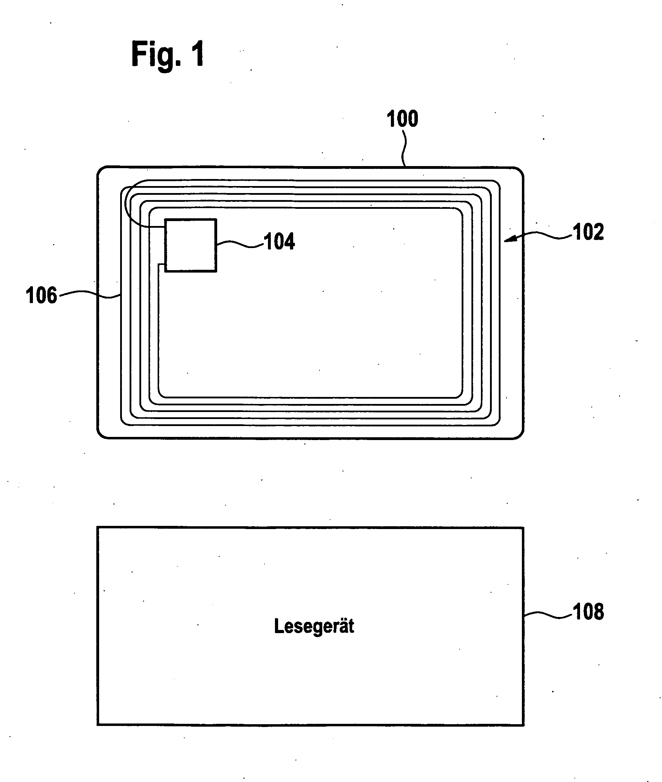

Die Figur 1 zeigt ein Dokument 100 mit einem elektronischen Gerät 102. Das elektronische Gerät 102 ist mit dem Dokument 100 fest verbunden. Beispielsweise ist das elektronische Gerät 102 in einer Schicht des Dokuments 100 eingebettet, wie zum Beispiel einlaminiert.

Beispielsweise beinhaltet das elektronische Gerät 102 ein Modul 104, welches einen integrierten elektronischen Schaltkreis umfasst. An das Modul 104 ist eine Antenne 106 angeschlossen, die zum Beispiel in mehreren Windungen entlang eines Randbereichs des Dokuments 100 verläuft.

Das Dokument 100 kann einen Träger aus Papier oder Kunststoff aufweisen oder aus mehreren Papier- und / oder Kunststoffschichten bestehen. Insbesondere kann das Dokument 100 als so genannte Chipkarte realisiert sein, wobei in diesem Fall das Modul 104 als so genanntes Chipkartenmodul ausgebildet ist. Zu an sich vorbekannten Chipkartenmodulen und Standards wird hierzu auf das "Handbuch der Chipkarten", Wolfgang Rankl, Wolfgang Effing, Hansa Verlag 1999 verwiesen, insbesondere Kapitel 3.2.2 auf Seite 71 ff.

Bei dem Dokument 100 kann es sich um ein Wert-, Identifikations- oder Sicherheitsdokument handeln, wie zum Beispiel einen Personalausweis oder einen Reisepass. Das Dokument 100 hat eine vorgegebene Gültigkeit, wie zum Beispiel eine vorgegebene Gültigkeitszeitdauer. Die Gültigkeit des Dokuments 100 kann alternativ oder zusätzlich zu einer Gültigkeitszeitdauer durch eine maximale Anzahl von Zugriffen auf das elektronische Gerät 102 gegeben sein. Die Gültigkeit ist vorzugsweise auf das Dokument 100 im Klartext aufgedruckt.

Der in dem Modul 104 befindliche integrierte Schaltkreis beinhaltet vorzugsweise einen nicht-flüchtigen elektronischen Speicher. Zum Zugriff auf die in dem elektronischen Speicher gespeicherten Daten sendet das Lesegerät 108 ein Funksignal ab, welches von der Antenne 106 des elektronischen Geräts 102 empfangen wird. Dieses Funksignal dient zur Energieversorgung des integrierten elektronischen Schaltkreises in dem Modul 104, so dass dieser die in seinem nicht-flüchtigen Speicher gespeicherten Daten ausliest und ein entsprechendes Funksignal generiert, welches über die Antenne 106 ausgestrahlt wird, so dass es von dem Lesegerät 108 empfangen werden kann.

Vorzugsweise ist das elektronische Gerät 102 als so genannter RFID-Transponder ausgebildet.

Das elektronische Gerät 102 unterliegt einem allmählich ablaufenden physikalischen und / oder chemischen Prozess, welcher dazu führt, dass in etwa zum Ende der Gültigkeit des Dokuments, das heißt nach Ablauf der Gültigkeitszeitdauer bzw. nach Erreichung oder Überschreitung einer vorgegebenen maximalen Anzahl von Lesezugriffen, das elektronische Gerät 102 zumindest teilweise funktionsunfähig wird. Der oder die physikalischen und / oder chemischen Prozesse, die zu der Funktionsunfähigkeit des elektronischen Geräts 102 führen, können sich dabei auf die Antenne 106, deren Anschluss an das Modul 104, die Umgebung des Moduls 104, der Antenne 106 und /oder deren Anschlüsse, das Modul 104 und / oder auf den integrierten elektronischen Schaltkreis des Moduls 104 beziehen.

Hierbei kann es sich um einen Diffusionsvorgang aus der Umgebung und / oder einem internen Reservoir des Dokuments 100 bzw. des elektronischen Geräts 102, eine Redox-Reaktion, eine Dotierung, eine allmähliche Änderung eines pH-Werts, eine Unterbrechung eines konjugierten Systems, eine Polymerisation oder Depolymerisation, Absorption, die allmähliche Ausrichtung von Partikeln und / oder einen anderen allmählich, kontinuierlich, quasi kontinuierlich oder schrittweise ablaufenden physikalischen und / oder chemischen Prozess handeln.

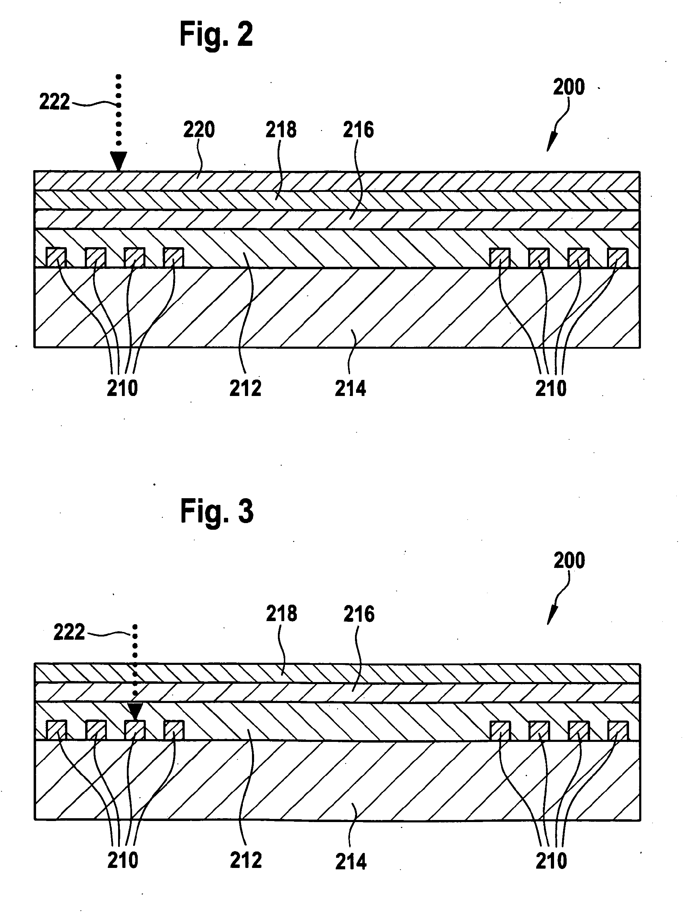

Die Figur 2 zeigt eine Ausführungsform, bei der aufgrund eines Diffusionsvorgangs zum Beispiel eine Oxidation einer Komponente des elektronischen Geräts ausgelöst wird. Elemente der Ausführungsformen nachfolgender Figuren sind dabei jeweils miteinander entsprechenden Bezugszeichen gekennzeichnet.

Das in dem Dokument 200 eingebettete elektronische Gerät (vgl. elektronisches Gerät 102 der Figur 1) beinhaltet Leiterbahnen 210, wobei es sich hierbei zum Beispiel um die Antenne (vgl. Antenne 106 der Figur 1) und / oder Leiterbahnen des integrierten elektronischen Schaltkreises in dem Modul (vgl. Modul 104 der Figur 1) handelt. Die Leiterbahnen 210 befinden sich in einer Matrix 212, die auf einem Substrat 214 angeordnet ist. Durch das Substrat 214 wird beispielsweise ein Kartenkörper einer Chipkarte gebildet.

Oberhalb der Matrix 212 ist eine Sperrschicht 216 angeordnet. Darüber befindet sich eine Deckschicht 218. Auf der Deckschicht 218 befindet sich eine entfernbare Folie 220. In der Umgebung des Dokuments 200 befinden sich Stoffe 222, wie zum Beispiel Sauerstoff und Wasser, in der das Dokument 200 umgebenden Atmosphäre. Die Folie 220 ist im wesentlichen undurchlässig für die Stoffe 222 oder hat zumindest eine um Größenordnungen kleinere Durchlässigkeit für die Stoffe 222 als die Sperrschicht 216.

Beispielsweise besteht die Leiterbahn 210 aus einem unedlen Metall oder einer Metalllegierung, die bei Kontakt zum Beispiel mit Wasser und / oder Sauerstoff oxidiert. Als Material für die Leiterbahn 210 eignet sich zum Beispiel Calcium oder Magnesium. Die Leiterbahn 210 kann auch aus einem leitfähigen Kunststoff, wie zum Beispiel einem leitfähigen Polymer bestehen, welcher eine definierte Empfindlichkeit gegenüber den Stoffen 222 aufweist, so dass dessen Leitfähigkeit durch den Einfluss der Stoffe 222 allmählich abnimmt.

Die Matrix 212 kann beispielsweise aus Kunststoff, Firnis, Druckfarben, Kleber oder Harz bestehen. Die Sperrschicht 216 kann beispielsweise aus Polyvinylacetat, Polyvinylalkohol, Polyvinylpyrrolidin oder Polyacrylsäure bestehen. Bei der Deckschicht 218 kann es sich beispielsweise um eine Dokumentendeckfolie aus Polyethylenterephthalat, Polycarbonat oder Polyethylen handeln. Bei der Folie 220 kann es sich beispielsweise um eine metallisierte Kunststofffolie, wie zum Beispiel um mit Aluminium bedampftes Polyethylen handeln.

Solange sich die Folie 220 auf der Deckschicht 218 befindet, wird das Dokument 200 gegen das Eindringen bzw. Eindiffundieren der Stoffe 222 geschützt, da diese nicht oder fast nicht durch die Folie 220 hindurchdringen können. Zur kontrollierten Auslösung der allmählichen Oxidation der Leiterbahn 210 wird die Folie 220 von der Deckschicht 218 abgezogen, so dass nunmehr die Stoffe 222 in einer kontrollierten Menge zu der Leiterbahn 210 durch die Deckschicht 218, die Sperrschicht 216 und die Matrix 212 hindurch diffundieren können. Die Durchlässigkeit insbesondere der Sperrschicht 216 ist dabei so gewählt, dass - eine mittlere Konzentration von Wasser und Sauerstoff in der das Dokument 200 umgebenden Atmosphäre vorrausgesetzt - die Leiterbahnen 210 während der Gültigkeitszeitdauer des Dokuments 200 eine vorgegebene Leitfähigkeit nicht unterschreitet.

Die Folie 220 kann lösbar auf eine Oberfläche des Dokuments 200 aufgeklebt sein. Alternativ oder zusätzlich kann das Dokument 200 auch in einer tütenförmigen Folie luftdicht eingeschweißt sein. Auch bei einer solchen tütenförmigen Folie kann es sich um einen Metall bedampften Kunststoff handeln, wie es an sich aus dem Bereich der Verpackung von Lebensmitteln bekannt ist. Nach der Entnahme des Dokuments 200 aus der tütenförmigen Folie wird wiederum der Diffusionsprozess der Stoffe 222 gestartet, so dass die Leiterbahn 210 allmählich oxidiert, bzw. deren Leitfähigkeit verringert wird.

Die Figur 3 zeigt das Dokument 200, nachdem die Folie 220 entfernt worden ist. Wie aus der Figur 3 ersichtlich, können nach Entfernung der Folie 220 die Stoffe 222 durch die Deckschicht 218, die Sperrschicht 216 und die Matrix 212 zu der Leiterbahn 210 hindurch diffundieren.

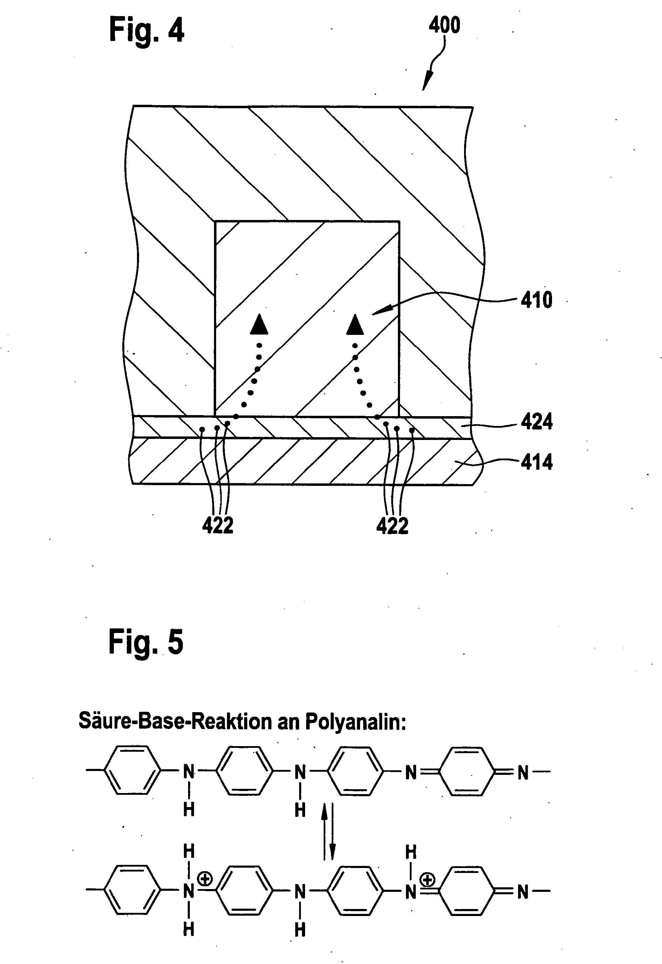

Die Figur 4 zeigt eine weitere Ausführungsform eines erfindungsgemäßen Dokuments 400, wobei in der Figur 4 exemplarisch eine Leiterbahn 410 des in dem Dokument 400 integrierten elektronischen Geräts (vgl. elektronisches Gerät 102 der Figur 1) dargestellt ist.

Auf dem Substrat 414 des Dokuments 400 oder des integrierten elektronischen Schaltkreises des elektronischen Geräts befindet sich eine Schicht 424, die einen Stoff 422 beinhaltet, wobei einige Partikel oder Moleküle des Stoffs 422 exemplarisch in der Figur 4 dargestellt sind. Die Schicht 424 dient als Reservoir für den Stoff 422, der aus der Schicht 424 in die darauf oder daneben befindliche Leiterbahn 410 eindiffundieren kann.

Durch die Eindiffusion des Stoffs 422 in die Leiterbahn 410 wird deren Leitfähigkeit unmittelbar oder mittelbar durch Auslösung eines weiteren physikalischen und / oder chemischen Vorgangs beeinflusst.

Beispielsweise erfolgt durch die Diffusion des Stoffs 422 in die Leiterbahn 410 eine Dotierung der Leiterbahn 410, so dass deren Leitfähigkeit herabgesetzt wird. Zum Beispiel hat die Leiterbahn 410 eine fluordotierte Zinndioxid-Schicht (FTO). Bei der Schicht 424 kann es sich um eine natriumhaltige Schicht handeln, zum Beispiel um handelsübliches Glas. Durch Diffusion, insbesondere von Natriumionen aus der Schicht 424 in die durch die FTO-Schicht gebildete Leiterbahn 410 wird deren Leitfähigkeit kontinuierlich verringert, so dass sich nach einer durch die Schichtdicken der Leiterbahn 410 und der Schicht 424 definierten Zeit, die Leitfähigkeit der Leiterbahn 410 so weit reduziert, dass dies zur Funktionsunfähigkeit des elektronischen Geräts führt.

Die Schichtdicken sind dabei so gewählt, dass die Zeitdauer bis zur Funktionsunfähigkeit des elektronischen Geräts in etwa der Gültigkeitszeitdauer des Dokuments 400 entspricht und vorzugsweise etwas darüber liegt, so dass das Dokument 400 in jedem Fall bis zu seiner maximalen Gültigkeit voll funktionsfähig bleibt.

In einer weiteren Ausführungsform kann die Leiterbahn 410 ein leitfähiges Polymer beinhalten, wie zum Beispiel Polyanilin oder PEDOT (Poly(3,4-ethylenedioxythiophene)), PEDOT:PSS oder eine Kombination aus PEDOT Blockcopolymere und einem flexiblen Polymer, wie zum Beispiel Polysiloxan, Polyester oder Polyacrylat. Die PEDOT-Blöcke und das flexible Polymer gehen dabei kovalente Bindungen ein. Die Leiterbahn 410 kann aber auch ein anderes intrinsisch leitfähiges Polymer (intrinsically conducting polymer - ICP) aufweisen.

Einige leitfähigen Polymere haben die Eigenschaft, dass wenn das leitfähige Polymer in Kontakt mit einem sauren oder basischen Mediums gebracht wird, dessen Leitfähigkeit insbesondere aufgrund der dadurch stattfindenden Protonendiffusion reduziert wird. Hierzu beinhaltet die Schicht 424 ein entsprechend saures oder basisches Medium, welches aufgrund eines Diffusionsprozesses allmählich zu einer Reduktion der Leitfähigkeit der Leiterbahn 410 führt.

Die Figur 5 zeigt hierzu exemplarisch eine Säure-Base-Reaktion an Polyanilin.

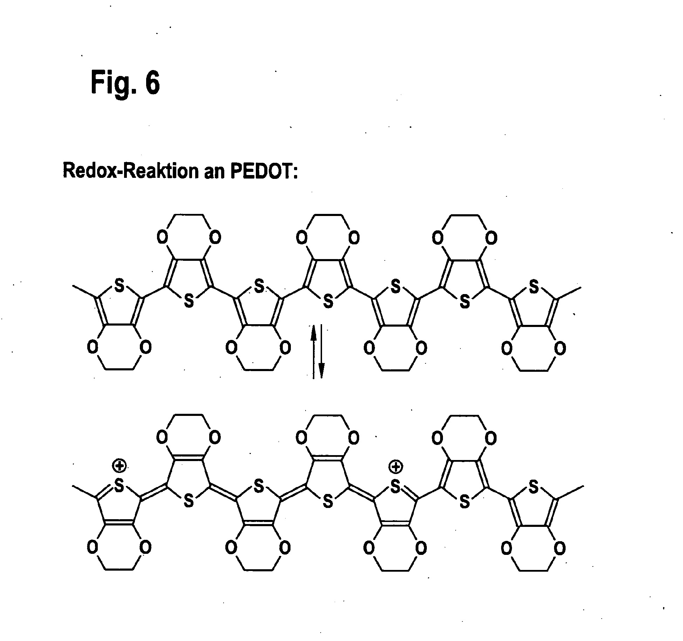

Eine weitere Möglichkeit zur allmählichen Reduktion der Leitfähigkeit des leitfähigen Polymers ist der Ablauf einer Redox-Reaktion. Der erforderliche Reaktant ist dabei in der Schicht 424 beinhaltet und diffundiert allmählich in die Leiterbahn 410. Die Figur 6 zeigt exemplarisch eine solche Redox-Reaktion, wenn die Leiterbahn 410 PEDOT beinhaltet.

Ein weiterer allmählich ablaufender Prozess, der zu einer Verringerung der Leitfähigkeit leitfähiger Polymere führt, ist die Unterbrechung eines durch das leitfähige Polymer gebildeten konjugierten Systems. Vorzugsweise wird eine solche Unterbrechung des konjugierten Systems durch eine Polymerisation / Depolymerisation erzielt, welche durch die Diffusion katalytisch aktiver Komponenten in die Leiterbahn 410 initiiert wird, so dass über eine Kontrolle der Diffusionsbedingungen die Lebensdauer des elektronischen Geräts einstellbar ist. Beispielsweise beinhaltet die Schicht 424 solche katalytisch aktive Komponenten.

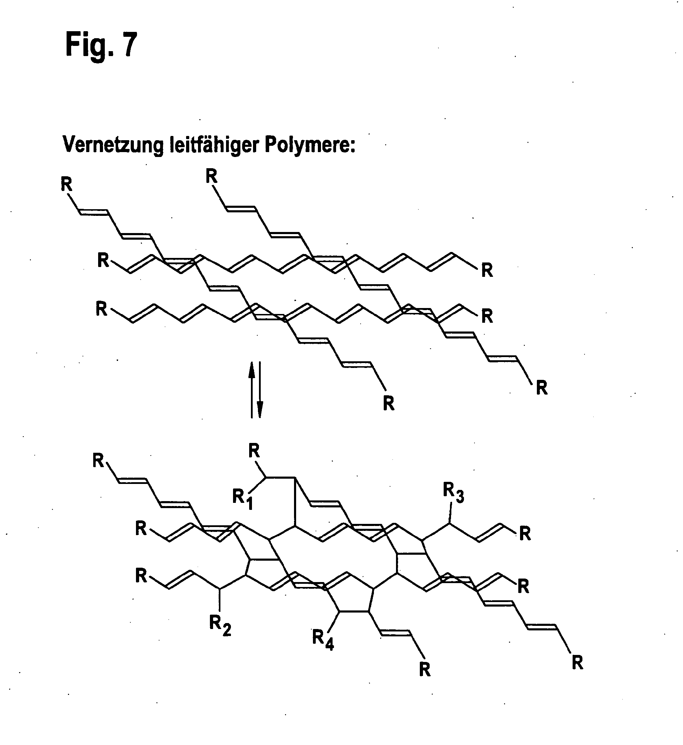

Die Figur 7 zeigt exemplarisch einen solchen Polymerisationsprozess.

Eine chemische Umsetzung eines leitfähigen Materials zu einem nicht leitfähigen Isolator stellt eine weitere Ausführungsform dar. So kann zum Beispiel ein Kupferkontakt durch Iod zu Kupfer (I)-iodid, einem Isolator, oxidiert werden. Beispielsweise beinhaltet die Leiterbahn 410 Kupfer, welches durch aus der Schicht 424 ausdiffundiertes Iod allmählich zu Kupfer(I)-iodid oxidiert wird, so dass sich das leitfähige Kupfer in einen Isolator umwandelt. Dadurch wird der elektrische Kontakt, der ursprünglich durch die Leiterbahn 410 hergestellt worden ist, unterbrochen und beispielsweise der integrierte elektronische Schaltkreis des elektronischen Geräts von der Antenne getrennt (vgl. elektronisches Gerät 102 und Antenne 106 der Figur 1).

Oberhalb der Schicht 424, die das Iod beinhaltet, kann in dem Dokument Stärke vorhanden sein, so dass es aufgrund der lod-Stärke-Interkalation zu einer Blaufärbung kommt. Diese Blaufärbung kann dazu genutzt werden, dass gedruckte Inhalte auf dem Dokument 400 unlesbar werden, indem das Dokument 400 als Ganzes oder in Teilbereichen dunkel eingefärbt wird. Ferner kann die Blaufärbung einen Indikator für die Funktionsunfähigkeit des elektronischen Gerätes darstellen.

Zur Aktivierung eines Dokumentes ist es ferner möglich, einen Isolator mittels einer chemische Umsetzung in eine leitfähige Struktur umzuwandeln und somit zum Beispiel einen Kontakt zwischen Antenne und Chip zu schaffen. Eine mögliche erfindungsgemäße Ausführung wäre die photochemische Reduktion von Silber(I)-Salzen zu Silber. Das so erzeugte Silber wiederum wird durch den natürlich in der Luft vorkommenden Schwefelwasserstoff langsam zu Silbersulfid umgesetzt, so dass das Dokument wieder deaktiviert wird.

Beispielsweise wird zur Aktivierung des Dokuments AgBr durch Belichtung zu Ag umgesetzt:

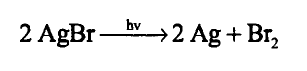

Auf diese Weise wird zunächst durch die Belichtung aus einem Isolator, zum Beispiel einem Silberhalogenid, ein Metall, welches den Kontakt der Leiterbahn 410 schließt. Durch die anschließende Umsetzung mit dem natürlich vorkommenden Schwefelwasserstoff (H₂S) bildet sich erneut ein Isolator, so dass der Kontakt wieder getrennt wird. Statt aus der Umgebung kann ein entsprechender Reaktand auch aus der Schicht 424 in die Leiterbahn 410 diffundieren.

Die chemische Formel hinsichtlich der Umwandlung von Silber in einen Isolator durch Schwefelwasserstoff ist nachfolgend angegeben.

2 Ag + H₂S + ½ O₂ → Ag₂S + H₂O

Bei der Herstellung des Dokuments 400 kann also durch die Belichtungsenergie bei der Aktivierung, die dadurch resultierende Menge an abgeschiedenem elementaren Silber der Leiterbahn 410 kontrolliert werden. Durch die Verwendung von Sperrfolien oder dergleichen lässt sich ferner die Diffusionsrate des Schwefelwasserstoffs zu der Leiterbahn 410 kontrollieren, so dass sich die Zeitdauer bis zur Unterbrechung des Kontakts einstellen lässt.

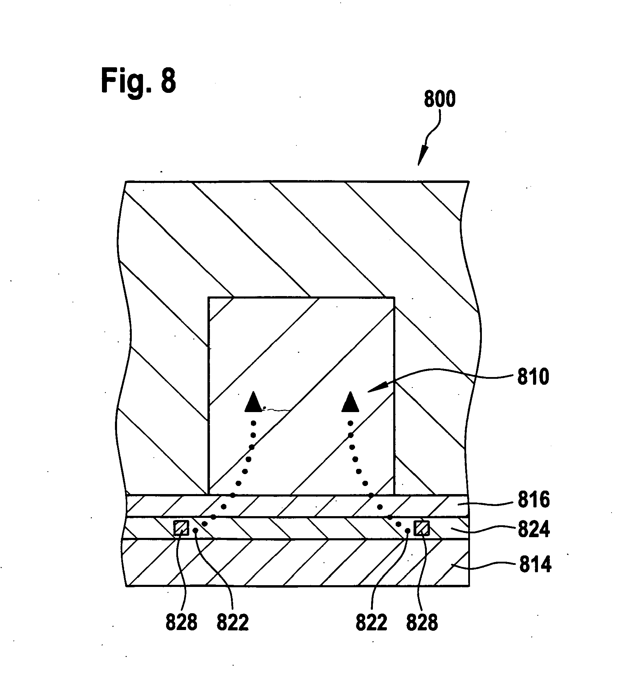

Die Figur 8 zeigt eine Ausführungsform des Dokuments 800, bei der sich auf der Schicht 824 eine Sperrschicht 816 befindet, durch die die Diffusionsrate von Partikeln aus der Schicht 824 zu der Leiterbahn 810 eingestellt werden kann.

Die mit Bezug auf die Figuren 4 bis 8 erläuterten Ausführungsformen der Erfindung können zum Beispiel durch eine kontrollierte mechanische Freisetzung zum Beispiel des Stoffs 422 oder 822 innerhalb des Dokuments 400 bzw. 800 gestartet werden.

Hierzu wird ein solcher Stoff oder ein Stoffgemisch, also zum Beispiel eine reaktive Komponente, ein Radikalstarter, eine Säure, eine Base oder ein Oxidationsmittel in einem von der Umgebung abgetrennten Bereich des Dokuments eingebracht. Die Umhüllung beziehungsweise Eingrenzung dieses Bereiches lässt sich zum Beispiel durch mechanischen Druck so zerstören, dass der Stoff freigesetzt wird und damit der Startzeitpunkt für die Deaktivierungsreaktion eindeutig definiert und frei gewählt werden kann.

Hierzu werden beispielsweise Mikrokapseln in den Dokumentenaufbau eingebracht, und zwar in unmittelbarer oder mittelbarer Nähe zum Beispiel zu der Leiterbahn 410, mit der der Stoff in Wechselwirkung treten soll oder auch durch eine die Diffusion kontrollierende Sperrschicht von dieser getrennt. Vorzugsweise werden die Mikrokapseln bei äußerem Druck aufgebrochen, wobei dies das Gesamtdokument 400 bzw. 800 äußerlich unbeschädigt lässt.

In einer Ausführungsform der Erfindung beinhaltet beispielsweise die Schicht 424 (vgl. Figur 4) oder die Schicht 824 (vgl. Figur 8) solche Mikrokapseln, die ein Reservoir für den Stoff 422 bzw. 822 bilden.

Die Figur 8 zeigt schematisch zwei solcher Mikrokapseln 828 in der Schicht 824. Zunächst ist der Stoff 822 nur oder fast nur in den Mikrokapseln 828 in der Schicht 824 vorhanden. Durch einen äußeren mechanischen Druck, zum Beispiel durch Aufpressen eines Stempels, werden zumindest einige der Wandungen der Mikrokapseln 828 aufgetrennt, so dass der Stoff 822 aus den betreffenden Mikrokapseln 828 zu der Leiterbahn 810 diffundieren kann, um dadurch aufgrund eines physikalischen und /oder chemischen Vorgangs deren Leitfähigkeit zu beeinflussen.

Bei der Leiterbahn 410 kann es sich um eine externe Leiterbahn, wie zum Beispiel die Antenne des elektronischen Geräts oder eine interne Leiterbahn des integrierten elektronischen Schaltkreises des elektronischen Geräts handeln. Wenn es sich um einen integrierten elektronischen Schaltkreis auf der Basis Silizium / Kupfer handelt, kann zum Beispiel die oben genannte Oxidation von Kupfer durch Iod zu Kupfer(I)-Iodid verwendet werden, um den integrierten elektronischen Schaltkreis nach einer bestimmten Zeitdauer funktionsuntüchtig werden zu lassen. Verwendet werden können in einer anderen Ausführungsform aber ebenso Materialien, welche Ionen enthalten, die in das Silizium interkalieren, und so die Funktionsweise des integrierten elektronischen Schaltkreises - zum Beispiel durch Veränderung von Leitfähigkeiten zu zerstören.

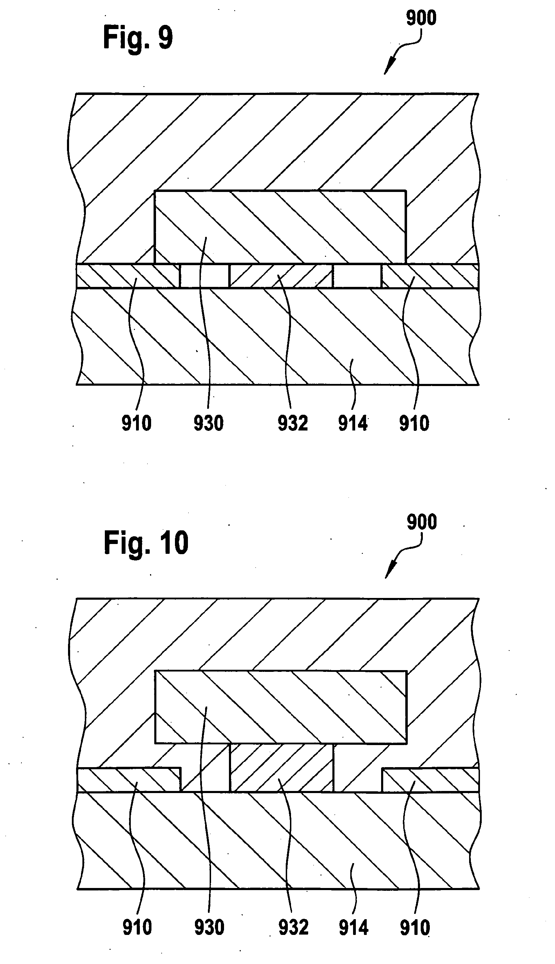

Die Figur 9 zeigt eine weitere Ausführungsform eines Dokuments 900, wobei in der Figur 9 exemplarisch eine Leiterbahn 910 des Dokuments 900 bzw. von dessen elektronischem Gerät dargestellt ist. Die Leiterbahn 910 ist unterbrochen, wobei die Unterbrechung durch einen Schaltkontakt 930 überbrückt wird. Besonders bevorzugt handelt es sich bei dem Schaltkontakt 930 um einen integrierten elektronischen Schaltkreis, d.h. einen sog. Chip, sowie bei den Kontakten 910 um die Kontakte der Antenne. Auf dem Substrat 914 befindet sich im Bereich der Unterbrechung der Leiterbahn 910 unterhalb des Schaltkontakts 930 ein Element 932. Dieses Element 932 ist in der Lage, seine Größe und / oder Form zu ändern. Dieses erfolgt besonders bevorzugt durch die Einlagerung eines Stoffes in dieses Element. In einer erfindungsgemäßen Ausführung ist ein solches Element aus einem vernetzten ionischen Polymer, einem so genannten Superabsorber.

Aufgrund der allmählichen Eindiffusion von Wasser in das Dokument 400 durch dessen verschiedene Schichten, gelangt Wasser zu dem Element 932, welches das Wasser einlagert, wodurch sich dessen Volumen vergrößert, wie in der Figur 10 dargestellt. Durch die Volumenvergrößerung des Absorptionselements 932 wird der Schaltkontakt 930 schlagartig von der Leiterbahn 910 getrennt, so dass die Unterbrechung der Leiterbahnen 910 nicht mehr von dem Schaltkontakt 930 überbrückt werden kann. Aufgrund der Öffnung des Schaltkontakts 930 wird also die Leiterbahn 910 nach einer gewissen Zeitdauer funktionsuntüchtig gemacht. Der Vorteil dieser Methode liegt unter anderem darin, dass es sich um einen Schaltvorgang handelt, der quasi digital von leitend auf nicht leitend erfolgt. Auf diese Weise kommt es nicht zu einer langsamen Verstimmung des Bauelements sondern zu dessen schlagartiger Funktionsunfähigkeit. Insbesondere kann auf diese Weise der Chip von der Antenne getrennt werden.

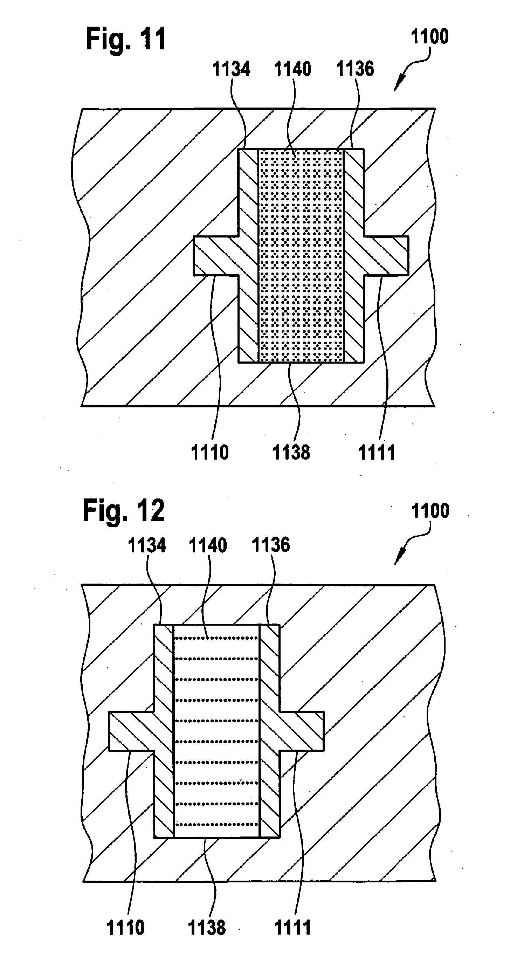

Die Figur 11 zeigt eine weitere Ausführungsform eines Dokuments 1100, wobei in der Figur 11 Leiterbahnen 1110 und 1111 des elektronischen Geräts des Dokuments 1100 exemplarisch dargestellt sind. Die Leiterbahn 1110 ist beispielsweise mit einer Elektrode 1134 und die Leiterbahn 1111 mit einer Elektrode 1136 verbunden oder aber die Leiterbahnen sind mit den Elektroden identisch. Die Elektroden 1134 und 1136 sind zum Beispiel einander gegenüberliegend angeordnet oder bevorzugter Weise nicht orthogonal zueinander angeordnet. In dem Bereich zwischen den Elektroden 1134 und 1136 befindet sich eine Matrix 1138, in der leitfähige Partikel 1140 eingebettet sind. Die Konzentration dieser Partikel wird so gering gewählt, dass es zu keiner Ausbildung eines leitfähigen Netzwerkes kommt und somit die Funktionsweise des Dokuments nicht gestört wird. In dem in der Figur 11 dargestellten Zustand des Dokuments 1100 sind die Partikel 1140 statistisch zufällig in der Matrix 1138 angeordnet. Dieser Zustand entspricht dem unbenutzten Zustand des Dokuments 1100.

Bei jeder maschinellen Benutzung des Dokuments 1100 wird für einen Zugriff auf das elektronische Gerät des Dokuments 1100 ein externes elektrisches und / oder magnetisches Feld erzeugt, welches dazu führt, dass sich die Partikel 1140 in der Matrix 1138 allmählich durch das anliegende Feld ausrichten, wie dies in der Figur 12 dargestellt ist. Durch diese Ausrichtung der Partikel 1140 kontaktieren diese miteinander, so dass die Elektroden 1134 und 1136 und damit die Leiterbahn 1110 und 1111 kurzgeschlossen werden, was zur Funktionsuntüchtigkeit des elektronischen Geräts führt.

Eine solche Ausführungsform des Dokuments 1100 ist beispielsweise für die Herstellung eines Visa-Dokuments geeignet, welches für eine bestimmte Anzahl von Einund / oder Ausreisen verwenden werden darf. Bei dieser Ausführungsform wird also die Gültigkeit nicht über eine bestimmte Zeitdauer, sondern über eine bestimmte Anzahl von zum Beispiel Lesezugriffen auf das elektronische Gerät des Dokuments 1100 bestimmt.

Bei den Partikeln 1140 kann es sich zum Beispiel um Kohlefasern, Nanotubes, wie zum Beispiel single walled nanotubes (SWNT) oder multi walled nanotubes (MWNT), oder Buckminster-Fullerene unterhalb der Perkolationsgrenze handeln.

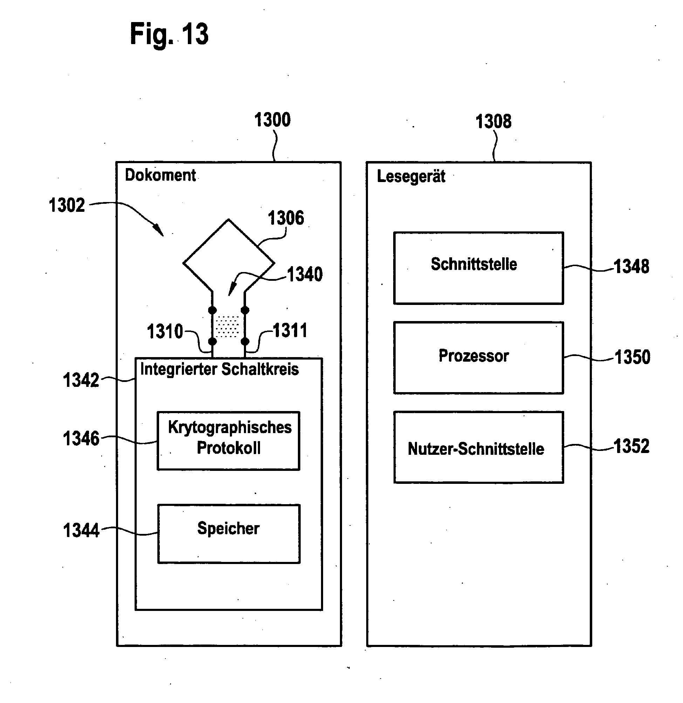

Die Figur 13 zeigt eine weitere Ausführungsform eines Dokuments 1300. Das elektronische Gerät 1302 des Dokuments 1300 wird durch einen integrierten elektronischen Schaltkreis 1342 gebildet, der einen nicht-flüchtigen elektronischen Speicher 1344 beinhaltet. Der Speicher 1344 dient beispielsweise zur Speicherung personen- und / oder objektbezogener Daten des Trägers des Dokuments 1300. Zum Schutz der Daten in dem Speicher 1344 gegen unautorisierten Zugriff wird durch den integrierten elektronischen Schaltkreis 1342 ein kryptographisches Protokoll 1346 implementiert.

Der integrierte elektronische Schaltkreis 1342 ist über Leiterbahnen 1310 und 1311 mit einer Antenne 1306 verbunden. Zwischen den Leiterbahnen 1310 und 1311 befinden sich gleichmäßig verteilt elektrisch leitfähige Partikel 1340 entsprechend der Ausführungsform der Figur 11. Solange noch keine Lesezugriffe auf den Speicher 1344 stattgefunden haben, sind die Partikel 1340 ungeordnet ausgerichtet.

Das elektronische Gerät 1302 ist vorzugsweise nach einer RFID-Technologie ausgebildet. Vorzugsweise hat das Gerät 1302 keine eigene Energieversorgung, sondern bezieht seine Energie von durch die Antenne 1306 empfangene Funksignale.

Bei dem Gerät 1302 handelt es sich also beispielsweise um einen so genannten RFID-Transponder.

Ein Lesegerät 1308 dient zum Zugriff auf das elektronische Gerät 1302. Hierzu hat das Lesegerät 1308 eine RFID-Schnittstelle 1342, die zur Aussendung von RFID-Funksignalen und zum Empfangen von entsprechenden Antwortsignalen von dem elektronischen Gerät 1302 dient. Das Lesegerät 1308 hat einen Prozessor 1350 zur Ausführung von Programminstruktionen, welche die Funktionsweise des Lesegeräts 1308 steuern, sowie eine Nutzerschnittstelle 1352, insbesondere eine graphische Nutzerschnittstelle.

Der Prozessor 1350 dient zur Teilnahme an dem kryptographischen Protokoll 1346, um auf die in dem Speicher 1344 abgelegten Daten zugreifen zu können.

Zum Zugriff auf die in dem Speicher 1344 gespeicherten Daten werden zwischen dem Lesegerät 1308 und dem Dokument 1300 bzw. dessen elektronischem Gerät 1302 Funksignale ausgetauscht, um die Daten aus dem Speicher 1344 auszulesen und zu dem Lesegerät 1308 zu übertragen. Aufgrund dieser Funksignale kommt es in dem Bereich zwischen den Leiterbahnen 1310 und 1311 zur Ausbildung von elektromagnetischen Feldern, die schrittweise zur allmählichen Ausrichtung der Partikel 1340 führen, bis ein Kurzschluss zwischen den Leiterbahnen 1310 und 1311 resultiert, welcher das elektronische Gerät 1302 funktionsuntüchtig macht, da hierdurch der Eingang des integrierten elektronischen Schaltkreises 1342 kurzgeschlossen wird.

### Bezugszeichenliste

- 100: Dokument
- 102: elektronisches Gerät
- 104: Modul
- 106: Antenne
- 108: Lesegerät
- 200: Dokument
- 210: Leiterbahn
- 212: Matrix
- 214: Substrat
- 216: Sperrschicht
- 218: Deckschicht
- 220: Folie
- 222: Stoff
- 400: Dokument
- 410: Leiterbahn
- 414: Substrat
- 424: Schicht
- 422: Stoff
- 800: Dokument
- 810: Leiterbahn
- 816: Sperrschicht
- 824: Schicht
- 822: Stoff
- 828: Mikrokapsel
- 900: Dokument
- 910: Leiterbahn
- 914: Substrat
- 930: Schaltkontakt
- 932: Absorptionselement
- 1100: Dokument
- 1110: Leiterbahn
- 1111: Leiterbahn
- 1134: Elektrode
- 1136: Elektrode
- 1138: Matrix
- 1140: Partikel
- 1300: Dokument
- 1302: elektronisches Gerät
- 1306: Antenne
- 1310: Leiterbahn
- 1313: Leiterbahn
- 1340: Partikel
- 1342: integrierter elektronischer Schaltkreis
- 1344: Speicher
- 1346: kryptographisches Protokoll
- 1348: Schnittstelle
- 1350: Prozessor
- 1352: Nutzerschnittstelle

## Patentansprüche

1. Dokument mit vorgegebener Gültigkeit und mit einem elektronischen Gerät (102; 1302), wobei das elektronische Gerät so ausgebildet ist, dass es aufgrund eines allmählich ablaufenden Prozesses zum Ende der Gültigkeit funktionsuntüchtig wird, **dadurch gekennzeichnet, dass** es sich bei dem Prozess um einen chemischen Prozess handelt.

2. Dokument nach Anspruch 1, wobei der Prozess eine Redox-Reaktion beinhaltet.

3. Dokument nach Anspruch 1 oder 2, wobei der Prozess eine Änderung eines pH-Werts beinhaltet.

4. Dokument nach einem der vorhergehenden Ansprüche, wobei der Prozess eine Polymerisation und/oder eine Depolymerisation beinhaltet.

5. Dokument mit vorgegebener Gültigkeit und mit einem elektronischen Gerät (102; 1302), wobei das elektronische Gerät so ausgebildet ist, dass es aufgrund eines allmählich ablaufenden physikalischen Prozesses zum Ende der Gültigkeit funktionsuntüchtig wird, **dadurch gekennzeichnet, dass** der physikalische Prozess einen Stofftransport beinhaltet.

6. Dokument nach einem der vorhergehenden Ansprüche, wobei das elektronische Gerät so ausgebildet ist, dass es während der Gültigkeit funktionsfähig bleibt und mit Ablauf der Gültigkeit funktionsuntüchtig wird.

7. Dokument nach einem der vorhergehenden Ansprüche, wobei es sich bei dem elektronischen Gerät um einen RFID-Transponder handelt.

8. Dokument nach einem der vorhergehenden Ansprüche, mit Mitteln (220; 828) zur kontrollierten Auslösung des Prozess.

9. Dokument nach einem der vorhergehenden Ansprüche, wobei der Prozess eine Diffusion eines Stoffs (222; 422; 822) beinhaltet.

10. Dokument nach Anspruch 9, wobei sich Mikrokapseln in einem Dokumentenaufbau befinden, wobei die Mikrokapseln durch äußeren Druck auf das Dokument aufbrechbar sind, wodurch die Diffusion des in den Mikrokapseln befindlichen Stoffs gestartet wird.

11. Dokument nach einem der vorhergehenden Ansprüche, mit einer Schutzfolie (220), wobei der Prozess durch Entfernung der Schutzfolie gestartet werden kann.

12. Dokument nach einem der vorhergehenden Ansprüche 9 oder 11 mit einem Reservoir (424; 824; 828) für den Stoff.

13. Dokument nach einem der vorhergehenden Ansprüche, wobei das Gerät eine erste Elektrode (1134) und eine zweite Elektrode (1136) aufweist, wobei sich zwischen den ersten und zweiten Elektroden eine Matrix (1138) befindet, in die leitfähige Partikel (1140) eingebettet sind, wobei die Partikel in der Matrix durch externe elektrische und / oder magnetische Felder allmählich ausrichtbar sind, so dass die ersten und zweiten Elektroden kurzgeschlossen werden.

14. Dokument nach einem der vorhergehenden Ansprüche, wobei eine oder mehrere Komponenten (210; 410; 810; 1342) des elektronischen Geräts aufgedruckt sind.

15. Dokument nach einem der vorhergehenden Ansprüche, wobei es sich um ein Wert- oder Sicherheitsdokument, insbesondere eine Identifikationsdokument, Reisepass, Personalausweis, Visum, Führerschein, Kreditkarte, Kundenausweis oder Fahrausweis handelt.

16. Dokument nach einem der vorhergehenden Ansprüche, wobei das Dokument als Aufkleber ausgebildet ist.

## Claims

1. Document with predetermined validity and comprising an electronic device (102; 1302), wherein the electronic device is configured to become non-functional at the end of the validity due to a gradual process, **characterized in that** the process is a chemical process.

2. Document according to Claim 1, wherein the process includes a redox reaction.

3. Document according to Claim 1 or 2, wherein the process includes a change in the pH.

4. Document according to one of the preceding claims, wherein the process includes a polymerization and/or a depolymerization.

5. Document with predetermined validity and comprising an electronic device (102; 1302), wherein the electronic device is configured to become non-functional at the end of the validity due to a gradual physical process, **characterized in that** the physical process includes a mass transfer.

6. Document according to one of the preceding claims, wherein the electronic device is configured to remain functional during the validity and to become non-functional at the end of the validity.

7. Document according to one of the preceding claims, wherein the electronic device is an RFID transponder.

8. Document according to one of the preceding claims, comprising means (220; 828) for the controlled triggering of the process.

9. Document according to one of the preceding claims, wherein the process includes diffusion of a substance (222; 422; 822).

10. Document according to Claim 9, wherein microcapsules are located in a document structure, wherein the microcapsules can break open owing to external pressure on the document, as a result of which the diffusion of the substance in the microcapsules is initiated.

11. Document according to one of the preceding claims, comprising a protective film (220), wherein the process can be started by removing the protective film.

12. Document according to one of the preceding claims 9 and 11, comprising a reservoir (424; 824; 828) for the substance.

13. Document according to one of the preceding claims, wherein the device has a first electrode (1134) and a second electrode (1136), wherein a matrix (1138), in which conductive particles (1140) are embedded, is present between the first and second electrodes, wherein the particles in the matrix can be gradually aligned by way of external electric and/or magnetic fields, so that the first and second electrodes are short-circuited.

14. Document according to one of the preceding claims, wherein one or more components (210; 410; 810; 1342) of the electronic device are printed on.

15. Document according to one of the preceding claims, wherein it is a valuable or security document, in particular an identification document, passport, personal identity card, visa, driving license, credit card, customer ID card or travel ticket.

16. Document according to one of the preceding claims, wherein the document is configured to be a sticker.

## Revendications

1. Document à durée de validité prédéterminée et doté d'un dispositif électronique (102; 1302), le dispositif électronique étant configuré de telle sorte qu'il devient non fonctionnel à la fin de la durée de validité suite au déroulement progressif d'un processus,
**caractérisé en ce que**
le processus est un processus chimique.

2. Document selon la revendication 1, dans lequel le processus contient une réaction redox.

3. Document selon les revendications 1 ou 2, dans lequel le processus présente une modification de la valeur du pH.

4. Document selon l'une des revendications précédentes, dans lequel le processus contient une polymérisation et/ou une dépolymérisation.

5. Document à durée de validité prédéterminée et doté d'un dispositif électronique (102; 1302), le dispositif électronique étant configuré de telle sorte qu'il devient non fonctionnel à la fin de la durée de validité suite au déroulement progressif d'un processus physique,
**caractérisé en ce que**
le processus physique contient un transport de matière.

6. Document selon l'une des revendications précédentes, dans lequel le dispositif électronique est configuré de telle sorte qu'il reste fonctionnel pendant la durée de validité et devient non fonctionnel à la fin de la durée de validité.

7. Document selon l'une des revendications précédentes, dans lequel le dispositif électronique est un transpondeur RFID.

8. Document selon l'une des revendications précédentes, doté de moyens (220, 828) de déclenchement contrôlé du processus.

9. Document selon l'une des revendications précédentes, dans lequel le processus contient la diffusion d'une substance (222; 422; 822).

10. Document selon la revendication 9, dans lequel des microcapsules sont situées dans la structure du document, les microcapsules pouvant être rompues par application d'une pression extérieure sur le document, ce qui lance la diffusion de la substance contenue dans les microcapsules.

11. Document selon l'une des revendications précédentes, doté d'une feuille de protection (220), le processus étant lancé par enlèvement de la feuille de protection.

12. Document selon l'une des revendications 9 ou 11 qui précèdent, doté d'un réservoir (424; 824; 828) pour la substance.

13. Document selon l'une des revendications précédentes, dans lequel le dispositif présente une première électrode (1134) et une deuxième électrode (1136), une matrice (1138) située entre la première et la deuxième électrode et dans laquelle des particules conductrices (1140) sont incorporées, les particules présentes dans la matrice pouvant être orientées progressivement par un champ électrique et/ou magnétique externe, ce qui met en court-circuit la première et la deuxième électrode.

14. Document selon l'une des revendications précédentes, dans lequel un ou plusieurs composants (210; 410; 810; 1342) du dispositif électronique sont imprimés.

15. Document selon l'une des revendications précédentes, qui est un document de valeur ou de sécurité, en particulier un document d'identification, un passeport, une carte d'identité, un visa, un permis de conduire, une carte de crédit, une carte de client ou un titre de voyage.

16. Document selon l'une des revendications précédentes, configuré comme étiquette à coller.
